# EUROPEAN PATENT APPLICATION

(11) **EP 4 517 562 A1**
(43) Date of publication of application: **05.03.2025**
(21) Application number: 23194506.4
(22) Date of filing: 31.08.2023
(51) Int. Cl.: G06F 18/25, G06V 10/25, G06V 10/764, G06V 10/82

(54) **CLASSIFICATION WITH IMPROVED FOCUS ON THE TASK AT HAND**

(71) Applicant: Robert Bosch GmbH, 70442 Stuttgart (DE)
(72) Inventor: Fischer, Volker, 71272 Renningen (DE); Munoz Delgado, Andres Mauricio, 71101 Schoenaich (DE); Mummadi, Chaithanya Kumar, Pittsburgh, Pennsylvania, 15212 (US); Saranrittichai, Piyapat, 90459 Nuernberg (DE)

(57) **Abstract**

A method (100) for classifying input measurement data (3) with respect to a given task (2) using a given classifier (1), comprising the steps of:
• identifying (110), based on the given task (2), a relevant subset (3a) of the input measurement data (3) that is of a higher relevancy with respect to the given task (2) than the rest of the input measurement data (3);
• determining (120), based on the input measurement data (3) and the identified subset (3a), an enhanced input (3b) for the given classifier (1), such that, in this enhanced input (3b), a portion of the input measurement data (3) that corresponds to the identified subset (3a) has a higher weight than other content of the input measurement data (3) not corresponding to this identified subset (3a);
• providing (130) the enhanced input (3b) to the given classifier (1), thereby obtaining an output (4) from the classifier (1); and
• determining (140) the final classification result (5) from this output (4).

## Description

The present invention relates to the classification of measurement data, such as images, towards a particular task, such as classifying instances of objects. In particular, such classification tasks are relevant for the automated movement of vehicles and robots.

### Background

Many automation tasks require a classification of measurement data for some task. For example, when a vehicle or robot moves in an at least partially automated manner, objects in the environment of the vehicle or robot need to be classified as to whether they are relevant for the planning of the future behavior of the vehicle or robot. In quality inspection, objects under test need to be classified as to their quality grade.

When using trainable classifiers, such as neural networks, there is a choice whether to use a generically trained model or a model trained specifically to the task at hand. A generically trained model may be readily available, whereas the onus of training for a specific task might be on the user. On the other hand, the specifically trained model will only deliver outputs that are relevant to the task at hand, whereas the generic model might also deliver outputs that are rather unrelated to this particular task.

### Disclosure of the invention

The invention provides a method for classifying input measurement data with respect to a given task using a given classifier. The measurement data may, for example, comprise still or video image, thermal images, ultrasound data, radar data or lidar data in the form of point clouds, or time series of any other measurable quantity. The classification maps each record of measurement data (such as an image, a video sequence, a point could, or a time series) to classification scores with respect to one or more classes that are available in the context of the given task. For example, in any task involving the classification of object instances, only a particular set of potential types of objects is asked for. A self-driving car will, e.g., need to reliably identify pedestrians, but it is not relevant what type of clothes they are wearing.

In the course of the method, based on the given task, a relevant subset of the input measurement data that is of a higher relevancy with respect to the given task than the rest of the input measurement data is identified. This analysis may be performed at any level of detail and based on any available information source. For example, if objects from a given set of types are to be detected, the relevant subset of the input measurement data may be selected to comprise information pertaining to objects of one of the given types. But the analysis is not limited to a semantic interpretation of the content of the input measurement data. Any other available prior knowledge may be used as well. For example, when classifying traffic-relevant objects in images, areas that cannot contain traffic-relevant objects, such as the inside decoration of shop windows, may be masked out of the images.

Based on the input measurement data and the identified subset, an enhanced input for the given classifier is determined. In this enhanced input, a portion of the input measurement data that corresponds to the identified subset has a higher weight than other content of the input measurement data not corresponding to this identified subset. In an extreme example, this may comprise limiting the enhanced input to content from the identified relevant subset. In less extreme examples, the enhanced input may comprise content from the identified relevant subset and an admixture of other content. To further emphasize different weights, in the example of images as input measurement data, portions that do not belong to the identified relevant subset may be rendered with a lower opacity in the enhanced input.

The enhanced input is provided to the given classifier. In this manner, an output is obtained from the classifier. The final classification result is determined from this output. In a simple example, the output may be directly used as the final classification result. But as it will be discussed later, more processing may be applied to the output.

It was found that, by creating an enhanced input for the given classifier that predominantly contains the identified relevant subset of the input measurement data, at least part of the advantages of a specifically trained classifier may be brought into a setting where a generically trained classifier is used, so that the advantages of this generically trained classifier remain active. That is, the advantages of the two kinds of classifiers may be combined: The classifier is readily available and has a high power to generalize, but at the same time, the output is limited to what is relevant for the task at hand.

In a simple example, consider the task of classifying images of people as to personality attributes such as intelligence, persistence, aggression potential or crime probability. A generic classifier for images of people may have been well-trained on very many images of people, but it will then not be tailored to the particular task at hand. Rather, it may also output classification scores for attributes that are unrelated to the task at hand, such as the clothing of the person. Basically, the training of a generic classifier strives to encode just about everything that is visible in the image, so as to have material for any concrete classification task that may come up.

In a particularly advantageous embodiment, determining the enhanced input comprises cropping, from the input measurement data, a portion comprising the identified relevant subset. In this manner, the given classifier is basically limited to processing information that is relevant to the task at hand, without being side-tracked by other information. This not only prevents an output that is unrelated to the task at hand. Rather, it also prevents that the classifier bases its decision for one of the classes that are relevant to the task at hand on input image information that is unrelated to this task. In the example of images of people, for the sought personality attributes, the face of the person is the relevant part of the image, and the decision of the classifier. If the person wears a T-shirt with a fancy print, or if there are shoulder pads velcroed into the T-shirt, this is not relevant for said personality attributes. But if this information is made available to the given classifier, it is still possible that this information somehow influences the decision. Rather than having to control this behavior after the fact by means of a saliency analysis, it is better to prevent it right from the start.

In a further advantageous embodiment, the size of the cropped portion is scaled over the size of the identified relevant subset by a predetermined scaling factor *α*. In this manner, besides the identified relevant subset, some context may be included in the enhanced input as well. This may improve the accuracy of the classification. In a simple example, if an image shows just a car and nothing else, it may be hard to distinguish whether the car is a toy car or a real car. But if the image additionally shows some context that allows to gauge the size of the object, this distinction becomes a lot easier.

As discussed before, in a particularly advantageous embodiment, the input measurement data comprises images, and the given task comprises classifying types of objects shown in these images from a given set of types. Here, the advantage of focusing the enhanced input on the task at hand is very pronounced. If the given classifier is generically trained, this means that it is trained on a set of classes that may be a very large superset of the set of classes relevant for the task at hand. The cropping encourages a limitation to these relevant classes without having to apply any changes to the given classifier itself. It might not be possible to apply such changes at all if, for example, a classifier provided by another entity in a cloud is used.

In a further particularly advantageous embodiment, identifying the relevant subset comprises detecting, by a given object detector, bounding boxes surrounding instances of objects of types from the given set of types. In this manner, the enhanced input may be tailored to a particular class without already anticipating the decision of the classifier. For example, if a bounding box meant for a car is used to crop an image, the classifier is still free to decide that what is visible in this bounding box is part of a truck.

Thus, in a further particularly advantageous embodiment, irrespective of the concrete type of measurement data, in a setting where a classifier is chosen that has been trained on a generic set of classes, identifying the relevant subset comprises extracting, from the input measurement data, information that is relevant with respect to a given subset of the generic set of classes. What may be done with bounding boxes in the case of images may just as well be adapted, e.g., to point clouds of radar, lidar or ultrasound data, or to time series of measurement quantities.

In a further particularly advantageous embodiment, a classifier is chosen that accepts measurement data as well as text prompts as inputs. The classifier then determine a classification score with respect to a class corresponding to the text prompt by rating a similarity between the measurement data and the text prompt. Such classifiers may be trained in a most generic manner for a wide variety of classes. For example, for each image in a set of training images, everything that is visible in the image may be annotated. The classifier may then be trained in a contrastive manner, such that it attributes high similarity scores to measurement data and text prompts that match, but low similarity scores to measurement data and text prompts that do not match.

In one exemplary implementation, the measurement data is mapped by the classifier to a data representation in a latent space Z by means of a data encoder. The text prompt is mapped to a text representation in the same latent space Z by means of a text encoder. The similarity between the measurement data and the text prompt may then be rated according to a distance between the data representation and the text representation in the latent space Z. This gives complete freedom to annotate one and the same feature that is visible in the image with multiple attributes, and also encode relationships between these attributes. For example, by virtue of a data representation being close to a first text representation that is in turn very far from a second text representation, it follows that this data representation is also far from the second text representation.

When a classifier is trained in this manner, the training is kept as generic as possible, so that the classifier may be used with a lot of different prompts. This makes the classifier usable for many different tasks. It also improves the usability of the classifier because there are multiple ways to encode same or similar things in a text prompt. This means that the data encoder, not knowing about for which tasks it will be used, will encode as much as possible into the data representation, so as to be prepared for as many different tasks as possible. In the example of images, the encoder will take note of each and every feature in the input image. The downside of this is that, given any one particular task, the data representations also contain much information that are not relevant for this one task. This is alleviated by selecting the relevant subset from the input measurement data and preparing an enhanced input for the classifier accordingly.

Apart from focusing the attention of the given classifier to the relevant features in the input measurement data, the selection of a relevant subset of input data may also alleviate bandwidth shortages for transmitting the measurement data. In particular, when a lot of measurement data is gathered on a vehicle, an existing vehicle bus network (such as a CAN bus) may not have spare capacity for transporting all this measurement data. The situation is similar if the classifier is not implemented on board the vehicle itself, but is rather implemented in a cloud and needs to be accessed by a mobile network. Therefore, in a further particularly advantageous embodiment, the input measurement data is obtained using at least one sensor carried on board a vehicle. The relevant subset and/or the enhanced input, but not the original input measurement data, is transmitted over a vehicle bus network of the vehicle, and/or over a public land mobile network, for further processing. In many situations, the relevant subset and/or the enhanced input may have only a tiny fraction of the volume of the original input measurement data from the one or more sensors.

In a further particularly advantageous embodiment, multiple enhanced inputs are supplied to the given classifier. Determining the final classification result then comprises aggregating the outputs from the classifier for these multiple enhanced inputs. For example, the outputs may be averaged. All these enhanced inputs will comprise the identified relevant subset of the input measurement data, but each of them will comprise different context information. Thus, in the result of the aggregating, the identified relevant subset of the measurement data will have a larger weight than the context information, while at the same time a sufficiently large variety of this context information is considered.

This may be emphasized still further in a further advantageous embodiment in which, in the aggregating towards the final classification result, the outputs are weighted according to how much of the enhanced input belongs to the relevant subset of the input measurement data. For example, in the case of images as input measurement data, it may be measured how many pixels of the enhanced input belong to the identified relevant subset.

In a further particularly advantageous embodiment, the input measurement data is obtained from at least one sensor. From the final classification result, an actuation signal is obtained. A vehicle, a driving assistance system, a robot, a quality inspection system, a surveillance system, and/or a medical imaging system, is actuated with the actuation signal. In this manner, the probability that the action performed by the respective actuated systems in response to the actuation signal is appropriate in the situation characterized by the input measurement data is improved because the given classifier will no longer be side-tracked to information that is not relevant for the task at hand.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory machine-readable data carrier, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention is described using Figures without any intention to limit the scope of the invention.

### Description of the Figures

The Figures show:
Figure 1 Exemplary embodiment of the method 100 for classifying input measurement data 3;
Figure 2 Illustration of the effect of producing enhanced inputs 3b for the classifier 1 on the performance of this classifier 1;
Figure 3 Illustration of an exemplary manner of selecting a relevant subset 3a of the measurement data 3 and producing enhanced inputs 3b;
Figure 4 Illustration of an exemplary manner to produce multiple enhanced inputs 3b out of the same measurement data 3.

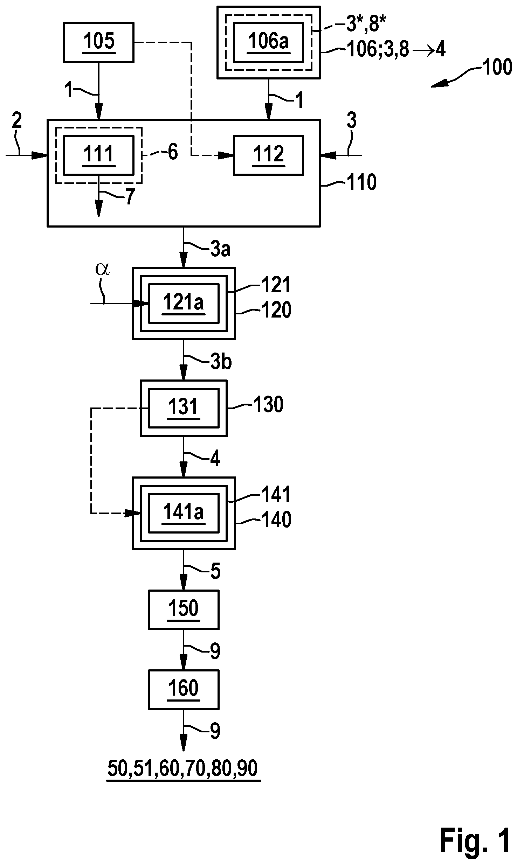

Figure 1 is a schematic flow chart of an exemplary embodiment of the method 100 for classifying input measurement data 3 with respect to a given task 2 using a given classifier 1.

In particular, according to block 105, a classifier 1 that has been trained on a generic set of classes may chosen.

Alternatively or in combination, according to block 106, a classifier 1 that is configured to:
- accept measurement data 3 as well as a text prompt 8 as inputs; and
- determine a classification score as output 4 with respect to a class corresponding to the text prompt 8 by rating a similarity between the measurement data 3 and the text prompt 8
may be chosen.

According to block 106a, the classifier 1 may be configured to:
- map the measurement data 3 to a data representation 3* in a latent space Z by means of a data encoder 1a;
- map the text prompt 8 to a text representation 8* in the same latent space Z by means of a text encoder 1b; and
- rate the similarity between the measurement data 3 and the text prompt 8 according to a distance between the data representation 3* and the text representation 8* in the latent space Z.

In particular, the input measurement data 3 may be obtained from at least one sensor.

In step 110, based on the given task 2, a relevant subset 3a of the input measurement data 3 that is of a higher relevancy with respect to the given task 2 than the rest of the input measurement data 3 is identified.

According to block 111, this identifying may comprise detecting, by a given object detector 6, bounding boxes 7 surrounding instances of objects of types from the given set of types. Such bounding boxes may predominantly be defined for images as input measurement data 3, but also for other data types, such as point clouds.

According to block 112, information that is relevant with respect to a given subset of a generic set of classed on which a classifier 1 has been trained may be extracted.

In step 120, based on the input measurement data 3 and the identified subset 3a, an enhanced input 3b for the given classifier 1 may be determined. In this enhanced input 3b, a portion of the input measurement data 3 that corresponds to the identified subset 3a has a higher weight than other content of the input measurement data 3 not corresponding to this identified subset 3a.

According to block 121, determining the enhanced input 3b may comprise cropping, from the input measurement data 3, a portion comprising the identified relevant subset 3a.

According to block 121a, the size of the cropped portion may be scaled over the size of the identified relevant subset 3a by a predetermined scaling factor *α*.

In step 130, the enhanced input is provided to the given classifier 1, so that an output 4 is obtained from the classifier 1.

In step 140, the final classification result 5 is obtained from this output 4.

According to block 131, multiple enhanced inputs 3b may be supplied to the given classifier 1. According to block 141, determining the final classification result 5 may then comprise aggregating the outputs 4 obtained from the classifier 1 for these multiple enhanced inputs 3b.

In particular, according to block 141a, in the aggregating towards the final classification result 5, the outputs 4 may be weighted according to how much of the enhanced input 3b belongs to the relevant subset 3a of the input measurement data 3.

In the example shown in Figure 1, in step 150, an actuation signal 9 is obtained from the final classification result 5. In step 160, a vehicle 50, a driving assistance system 51, a robot 60, a quality inspection system 70, a surveillance system 80, and/or a medical imaging system 90, is actuated with the actuation signal 9.

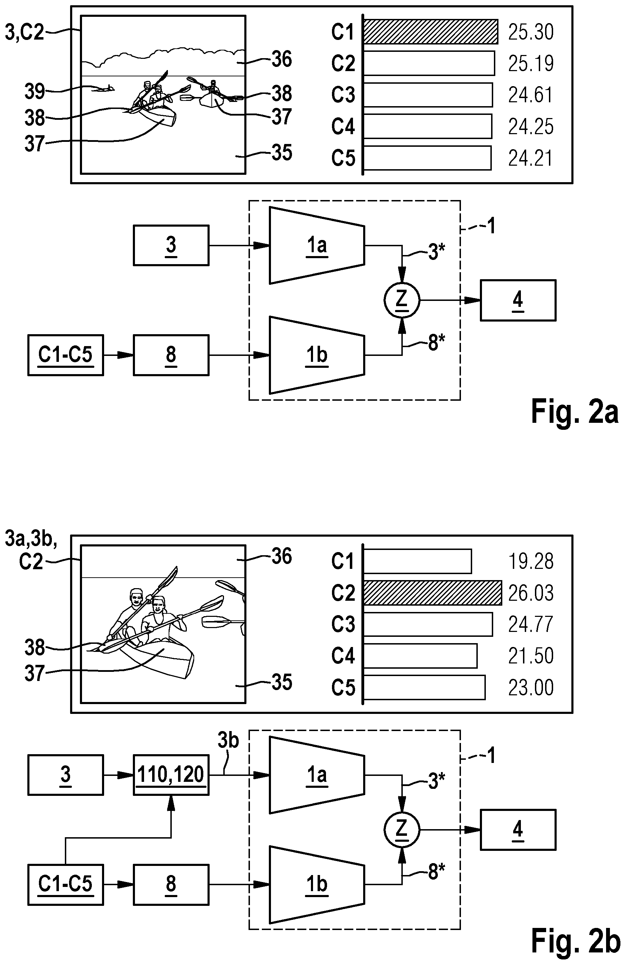

Figure 2 illustrates the effect of producing enhanced inputs 3b for the classifier 1 on the performance of this classifier 1, and in particular on the accuracy of this classifier 1. In the example application analyzed in Figure 2, images as input measurement data 3 are classified as to which types of objects they contain. In this simple example, the five available classes are:
- sandbar (C1);
- canoe (C2);
- paddle (C3);
- snorkel (C4); and
- speedboat (C5).

Figure 2a shows classification scores produced by a conventional classifier 1. This classifier 1 comprises an image encoder 1a that encodes the image 3 into a data representation 3* in a latent space Z, as well as a text encoder that encodes text prompts 8 representing the classes C1-C5 into representations 8* in the same latent space Z. The classification scores 4 with respect to classes C1-C5 are dependent on distances between data representations 3* on the one hand and text representations 8* corresponding to the classes C1-C5 on the other hand. The image 3 shows a water surface 35 with a sandbar 36, canoes 37 with paddles 38, as well as a snorkeling swimmer 39.

The conventional classifier 1 produces classification scores that are quite close together. There is only a difference of 1.09 between the lowest score for the class C5 and the highest score for the class C1. The class with the highest score of 25.30 is C1 "sandbar", which is different from the ground-truth class C2 "canoe" with which the image 3 was labelled.

The reason is that the image 3 contains so much information about other classes besides the desired class C2 "canoe". In particular, it contains very much water surface and also a large sandbar, as well as several paddles and someone with a snorkel. The canoe that is, according to the ground-truth label, the main object in the image 3 only makes up a tiny portion of this image 3. The generically trained classifier 1 knows about all classes and attributes a nonzero score to them whenever it finds the respective objects in the image 3. The minor differences between the scores merely reflect that the respective objects were recognized differently well.

Figure 2b shows what changes when the image 3 is processed into an enhanced input 3b by means of steps 110 and 120 of the method 100. The enhanced input 3b is a crop of the original image 3 that emphasizes and enlarges the canoe of class C2 as the main object. The canoe fills a lot more of the enhanced input 3b. Consequently, the classification score for the class C2 "canoe" is now the highest one and 1.26 above the next-best score 24.77 for the class C3 "paddle" that is comprehensible as well due to many paddles being present in the enhanced input 3b. From this score, there is a drop of 1.7 to the next score for the class C5 "speedboat". The difference between the highest score for the class C2 "canoe" and the lowest score for the class C1 "sandbar" is 6.75, compared with 1.09 obtained on the original image 3.

That is, while keeping the classifier 1 as it is, its classification accuracy can be improved in a zero-shot manner without further training just by cropping the image to mainly contain the object of interest.

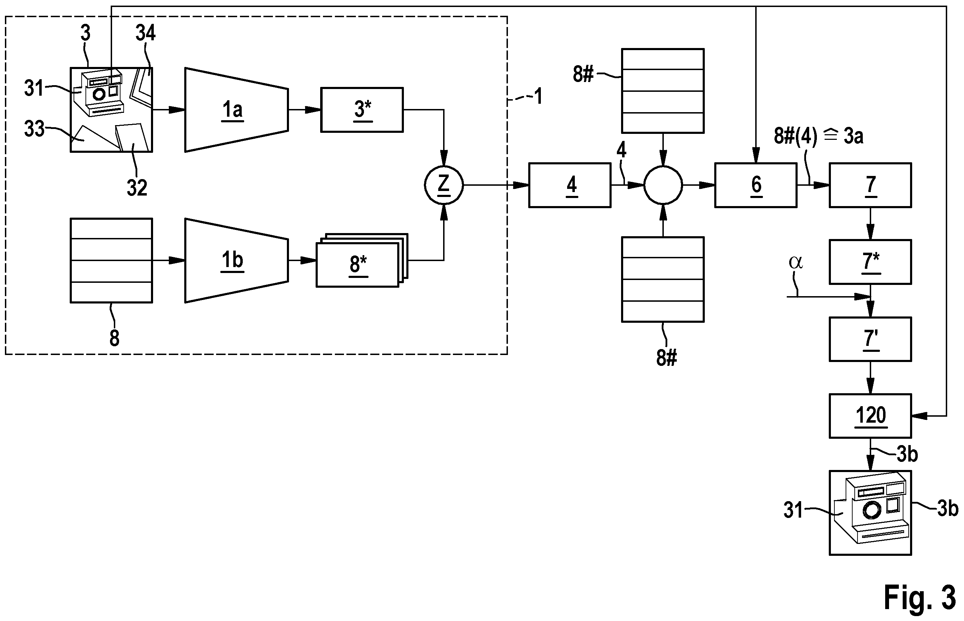

Figure 3 illustrates the preparation of the enhanced input 3b on another example. Here, the image 3 contains an instant camera 31, a package of instant camera film 32, a writing pad 33, and a photo frame 34.

The image 3 is analyzed with a generically trained classifier 1 with the same architecture as the one shown in Figure 2a. This classifier 1 may also be identical to that which is later used for the further processing of the enhanced input 3b. The text prompts 8 correspond to the generic set of classes on which the classifier was trained. For every such text prompt 8, a classification score 4 results.

In the example shown in Figure 3, the text prompts 8# that have a partial overlap with the generic text prompts 8 are relevant for the classification task at hand. For example, the text prompts 8# may relate to different types of cameras, such as instant camera, compact camera, and reflex camera. Out of the generic text prompts 8 that are also in the special set 8#, only those with the best classification scores 4 are considered to represent the relevant subset 3a of the image as input measurement data 3. For those prompts (and thus classes), bounding boxes 7 for object instances in the image 3 are determined by an object detector 6. Out of several bounding box candidates 7, a bounding box 7* with a maximum score is selected. It is then enlarged by a factor of *α*, so that the final bounding box 7' comprises a bit of the context around the respective object as well. With this final bounding box 7', the original image 3 is cropped and resized to form the enhanced input 3b in step 120 of the method 100.

In the example shown in Figure 3, the only instance of a camera in the image 3 is the instant camera 31. Consequently, the final bounding box 7' comprises this instant camera 31 and a little context around it.

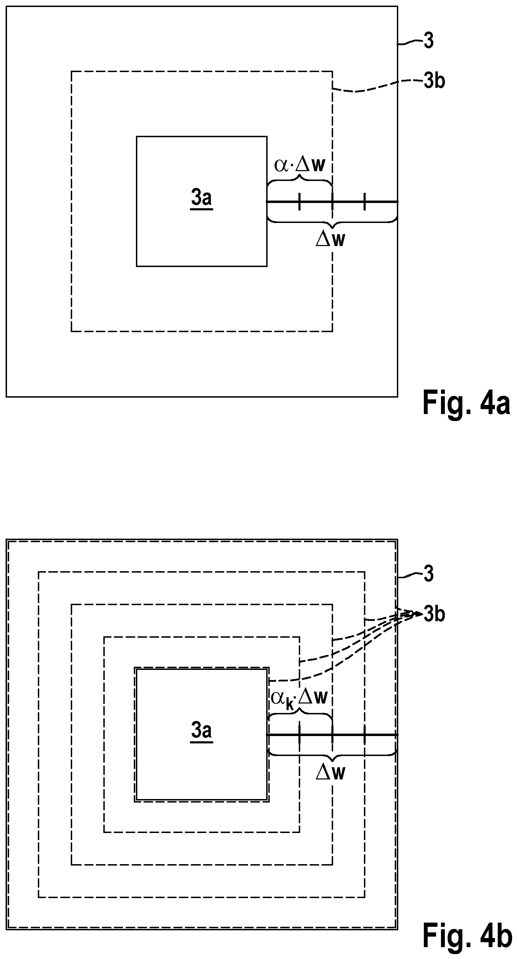

Figure 4 illustrates how multiple enhanced inputs 3b may be created from one and the same identified relative subset 3a of input measurement data 3.

Figure 4a shows an example of one enhanced input 3b generated from the identified relative subset 3a that is in turn a cut-out from the original input measurement data 3, here: an image. Compared with the original image 3, the identified relative subset has lost a strip with width Δ*w* around it. The enhanced input 3b is formed by adding, to the identified relative subset 3a, a strip with width *α* · Δ*w* around it.

According to Figure 4b, this may be repeated for different scaling factors *αₖ*, up to *αₖ* = 1, to form multiple enhanced inputs 3b. In each such enhanced input 3b, the weight of any one individual feature decreases commensurately with the increase of the size of the enhanced input 3b.

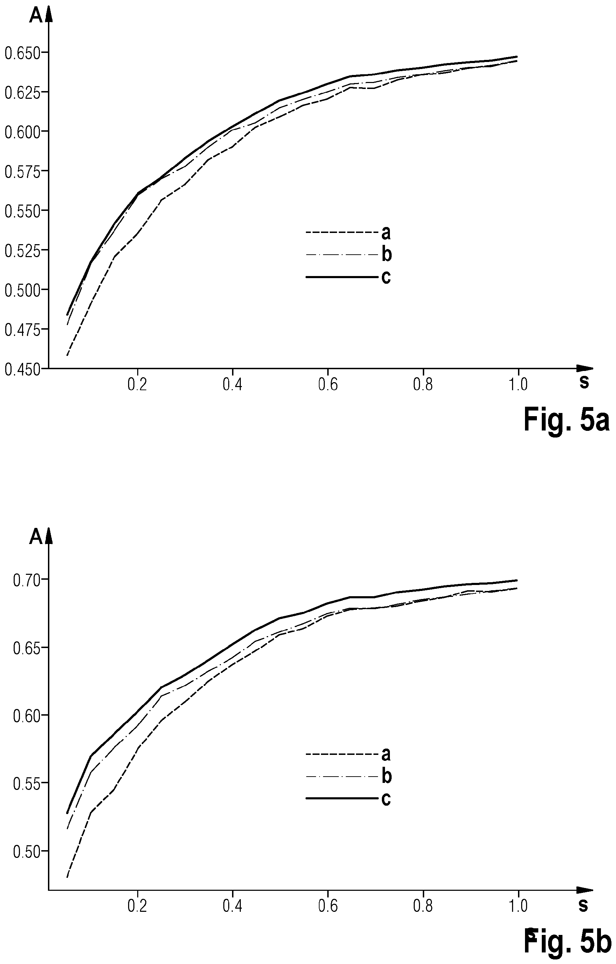

Figure 5 illustrates how the finally achieved classification accuracy on the publicly available ImageNetS919 dataset depends on object size conditions. The accuracy A is plotted over the relative object size s. Curve a is the accuracy that is achieved by applying the classifier 1 as per the prior art. Curve b is the accuracy that is achieved by producing one single enhanced input 3b and providing this to the same classifier 1. Curve c is the accuracy that is achieved by producing multiple enhanced inputs 3b, providing all those to the classifier 1, and aggregating the results. In Figure 5a, each class corresponds to exactly one text prompt 8, whereas, in Figure 5b, each class corresponds to multiple possible text prompts 8.

The relative object size s is measured as the ratio of the size of the bounding box of the object to the total size of the image.

As it can be seen in Figure 5, the use of one single enhanced input 3b that focuses on the concrete classification task at hand yields a considerable boost in accuracy A for smaller relative object sizes s. For larger object sizes s, the advantage decreases and finally vanishes. This is understandable when recapitulating Figure 2: The less size the object of interest occupies in the image, the more information that is not pertinent to the classification task at hand the image may contain. If the object of interest already fills the image completely, then little to nothing may be gained by cropping.

Using multiple enhanced inputs 3b only yields a very small further advantage for smaller object sizes s. However, for larger object sizes s, this advantage increases.

## Claims

1. A method (100) for classifying input measurement data (3) with respect to a given task (2) using a given classifier (1), comprising the steps of:
• identifying (110), based on the given task (2), a relevant subset (3a) of the input measurement data (3) that is of a higher relevancy with respect to the given task (2) than the rest of the input measurement data (3);
• determining (120), based on the input measurement data (3) and the identified subset (3a), an enhanced input (3b) for the given classifier (1), such that, in this enhanced input (3b), a portion of the input measurement data (3) that corresponds to the identified subset (3a) has a higher weight than other content of the input measurement data (3) not corresponding to this identified subset (3a);
• providing (130) the enhanced input (3b) to the given classifier (1), thereby obtaining an output (4) from the classifier (1); and
• determining (140) the final classification result (5) from this output (4).

2. The method (100) of claim 1, wherein determining (120) the enhanced input (3b) comprises cropping (121), from the input measurement data (3), a portion comprising the identified relevant subset (3a).

3. The method (100) of claim 2, wherein the size of the cropped portion is scaled (121a) over the size of the identified relevant subset (3a) by a predetermined scaling factor *α*.

4. The method (100) of any one of claims 1 to 3, wherein the input measurement data (3) comprises images, and the given task (2) comprises classifying types of objects shown in these images from a given set of types.

5. The method (100) of any one of claims 2 to 3 and claim 4, wherein identifying the relevant subset (3a) comprises detecting (111), by a given object detector (6), bounding boxes (7) surrounding instances of objects of types from the given set of types.

6. The method (100) of any one of claims 1 to 5, wherein:
• a classifier (1) is chosen (105) that has been trained on a generic set of classes; and
• identifying the relevant subset (3a) comprises extracting (112), from the input measurement data (3), information that is relevant with respect to a given subset of the generic set of classes.

7. The method (100) of any one of claims 1 to 6, wherein a classifier (1) is chosen (106) that is configured to:
• accept measurement data (3) as well as a text prompt (8) as inputs; and
• determine a classification score with respect to a class corresponding to the text prompt (8) by rating a similarity between the measurement data (3) and the text prompt (8).

8. The method (100) of claim 7, wherein the classifier (1) is configured to (106a):
• map the measurement data (3) to a data representation (3*) in a latent space Z by means of a data encoder (1a);
• map the text prompt (8) to a text representation (8*) in the same latent space Z by means of a text encoder (1b); and
• rate the similarity between the measurement data (3) and the text prompt (8) according to a distance between the data representation (3*) and the text representation (8*) in the latent space Z.

9. The method (100) of any one of claims 1 to 8, wherein
• the input measurement data (3) is obtained using at least one sensor carried on board a vehicle, and
• the relevant subset (3a) and/or the enhanced input (3b), but not the original input measurement data (3), is transmitted over a vehicle bus network of the vehicle, and/or over a public land mobile network, for further processing.

10. The method (100) of any one of claims 1 to 9, wherein
• multiple enhanced inputs (3b) are supplied (131) to the given classifier (1); and
• determining the final classification result (5) comprises aggregating (141) the outputs (4) obtained from the classifier (1) for these multiple enhanced inputs (3b).

11. The method (100) of claim 10, wherein, in the aggregating towards the final classification result (5), the outputs (4) are weighted (141a) according to how much of the enhanced input (3b) belongs to the relevant subset (3a) of the input measurement data (3).

12. The method (100) of any one of claims 1 to 11, wherein
• the input measurement data (3) is obtained from at least one sensor;
• from the final classification result (5), an actuation signal (9) is obtained (150); and
• a vehicle (50), a driving assistance system (51), a robot (60), a quality inspection system (70), a surveillance system (80), and/or a medical imaging system (90), is actuated (160) with the actuation signal (9).

13. A computer program, comprising machine-readable instructions that, when executed by one or more computers and/or compute instances, cause the one or more computers and/or compute instances to perform the method (100) of any one of claims 1 to 12.

14. A non-transitory machine-readable data carrier and/or a download product with the computer program of claim 13.

15. One or more computers with the computer program of claim 13, and/or with the non-transitory machine-readable data carrier and/or download product of claim 14.
